# FASCICULE DE BREVET EUROPEEN

(11) **EP 1 417 080 B1**
(45) Date de publication et mention de la délivrance du brevet: **26.07.2006**
(21) Numéro de dépôt: 02794808.2
(22) Date de dépôt: 12.08.2002
(51) Int. Cl.: B28B 5/04, B30B 11/14

(54) **INSTALLATION DE MOULAGE, NOTAMMENT DESTINEE A LA FABRICATION D'ELECTRODES, ET PROCEDE MIS EN OEUVRE DANS UNE TELLE INSTALLATION**
INSBESONDERE FÜR DIE HERSTELLUNG VON ELEKTRODEN BESTIMMTE GIESSANLAGE UND IN EINER SOLCHEN ANLAGE VERWENDETES VERFAHREN
CASTING INSTALLATION THAT IS INTENDED, IN PARTICULAR, FOR THE PRODUCTION OF ELECTRODES AND THE METHOD USED IN ONE SUCH INSTALLATION

(30) Priorité: 16.08.2001 FR 0110862
(43) Date de publication de la demande: 12.05.2004
(73) Titulaire: Solios Carbone, 69700 Givors (FR)
(72) Inventeur: MOLIN, André, 69702 Givors Cedex (FR)
(74) Mandataire: Duthoit, Michel Georges André
(86) Numéro de dépôt international: PCT/FR2002/002858
(87) Numéro de publication internationale: WO 2003/016009

(56) Documents cités:
- DE-A- 4 415 177
- FR-A- 2 439 654
- FR-A- 2 729 602
- US-A- 2 859 502
- MALBURG A: "OPTIMISED VERTICAL MACHINES FOR MANUFACTURING RUBBER MOULDINGS" KUNSTSTOFFE EUROPE, CARL HANSER VERLAG, MUNCHEN, DE, no. 1, 1 octobre 1989 (1989-10-01), pages 123-124,126-12, XP000282022

## Description

La présente invention concerne une installation de moulage, notamment destinée à la fabrication d'électrodes, ainsi qu'un procédé mis en oeuvre dans une telle installation.

Toutefois, bien que plus particulièrement prévue pour de telles applications, ladite installation de moulage pourra également être utilisée pour la fabrication de tout autre type de produit moulé.

Dans les installations de moulage, il est avantageux dans certains cas, lorsque la pâte qui est coulée dans le moule présente une certaine viscosité et/ou granulométrie, d'effectuer des opérations de compression de manière à obtenir les bonnes caractéristiques du produit formé et pour faire ou parfaire la mise en oeuvre dudit produit. Actuellement, il existe différents types d'installations connues permettant, après le remplissage du moule, de réaliser ces opérations de compression.

A cet effet, un premier type d'installation connu est constitué par un alimentateur de pâte, une trémie mobile, deux dispositifs de compression comportant chacun une table, sur laquelle repose un moule, et une forme pressante. L'installation fonctionne en déplaçant la trémie mobile, de manière sensiblement horizontale, entre une position où elle est alimentée en pâte et deux positions de déchargement de la pâte, positions dans lesquelles ladite trémie surplombe l'un ou l'autre des moules.

Dans cette installation, on peut prévoir de réaliser le formage du produit dans un moule pendant que la trémie s'alimente en pâte ou déverse la pâte dans le second moule.

Ce type d'installation présente différents inconvénients, et notamment cette installation oblige le déplacement d'un organe actif, c'est-à-dire la trémie, ce qui engendre notamment l'installation de liaisons de transfert d'énergie souples. De plus, ce type d'installation nécessite la création de deux postes de démoulage et d'éjection, c'est à dire un poste par moule, ce qui accroît le coût de l'installation.

Un second type d'installation connu est constituée par un alimentateur de pâte, deux trémies de pesée fixes et deux dispositifs mobiles de compression comportant deux tables vibrantes mobiles supports de moule.

Cette installation présente le même inconvénient que la précédente, c'est-à-dire qu'elle nécessite le déplacement d'organes actifs, à savoir cette fois les tables, ce qui engendre une complexité de réalisation compte tenu de la masse déplacée importante et des organes actifs déplacés. En effet, chaque table est déplacée entre deux positions correspondant à une position de remplissage du moule, ladite table se trouvant alors à l'aplomb de sa trémie, et une position de formage correspondant à une position de la table à l'aplomb de la forme pressante. Une telle installation présente également l'inconvénient d'utiliser deux trémies, ce qui augment d'autant le prix de l'installation.

Enfin, un troisième type d'installation connu propose une installation constituée d'un alimentateur de pâte, d'une trémie fixe, de trois moules, et d'un dispositif de compression, ainsi que d'un carrousel permettant le déplacement des moules successivement sous la trémie puis au niveau du dispositif de compression puis au niveau d'une zone de démoulage.

Cette installation nécessite toutefois la fabrication et l'installation du carrousel, il nécessite également l'emploi de trois moules.

On connaît du document DE-44 15 177 une installation de moulage comprenant un plan de pose intermédiaire intercalé entre deux dispositifs de compression. Deux moules sont assujettis à un charlot. Chacun des moules est déplacé alternativement entre l'un des dispositifs de compression et le plan de pose intermédiaire.

On connaît du document US-2.859.502 une installation de moulage comprenant une trémie de chargement intercalé entre deux dispositifs de compression.

Deux compartiments peuvent être alternativement déplacés au niveau de la trémie en direction de l'un des dispositifs de compression et inversement afin de rempliR des moules.

Les moules sont constitués d'une boîte de moulage assujettie verticalement en dessous de chaque dispositif de compression et d'une plaque venant obturer la face inférieure de ladite boite de moulage.

Deux chaînes de transfert transversales permettent de déplacer des plaques en dessous de la boîte de moulage, et permettent, après l'étape de compression, d'évacuer les produits moulés, une fois la boîte de moulage levée.

Toutefois, ces installations ne permettent pas d'obtenir les résultats et les avantages de celle de la présente invention

Le but de l'invention est de proposer une installation de moulage, notamment destinée à la fabrication d'électrodes, qui pallie les inconvénients précités et permet de proposer une installation dans laquelle aucun organe actif n'est déplacé.

Un autre but de la présente invention est de proposer une installation de moulage, notamment destinée à la fabrication d'électrodes, qui permette l'emploi d'un unique poste de démoulage et d'éjection du produit.

Un autre but de la présente invention est de proposer une installation de moulage, notamment destinée à la fabrication d'électrodes, qui permette un accès aisé à chacun des organes actifs pour faciliter les opérations de manutention.

Un autre but de la présente invention est de proposer un procédé mis en oeuvre dans l'installation précitée qui permette d'obtenir une cadence de fabrication élevée, et un travail de préparation et/ou de démoulage en temps masqué.

Selon l'invention, l'installation de moulage, notamment destinée à la fabrication d'électrodes, comprend une trémie, au moins un premier et un second moules, deux dispositifs de compression comportant chacun une table de formage et une forme pressante, caractérisée en ce que le premier et le deuxième moule sont constitués d'une paroi latérale et d'une paroi de fond, ladite installation de moulage comprenant en outre :
- un plan de poste intermédiaire fixe, intercalé entre lesdits dispositifs de compression, et à l'aplomb de ladite trémie ;
- des moyens de déplacement pour disposer chaque moule soit au niveau d'une table de formage, soit au niveau dudit plan de pose intermédiaire,
- des moyens d'évacuation aptes à permettre le démoulage et l'éjection du produit moulé contenu dans le moule, au niveau dudit plan de pose intermédiaire et aptes à détacher la paroi latérale du moule de la paroi de fond dudit moule.

L'invention vise également un procédé mis en oeuvre dans l'installation telle que précitée, procédé dans lequel on réalise pour chaque moule :
- une étape de remplissage du moule,
- une étape de chargement du moule sur ladite table de formage correspondante,
- une étape de formage,
- une étape de déchargement du moule de ladite table de formage correspondante permettant de replacer ledit moule à l'aplomb de ladite trémie.

Elle sera mieux comprise à la lecture de la description suivante, accompagnée des dessins en annexe qui en font partie intégrante et parmi lesquels :
- la figure 1 illustre, selon une vue de coupe schématique, un exemple de réalisation de l'installation conforme à l'invention.
- les figures 2 à 11 montrent l'exemple de réalisation de la figure 1 dans des configurations différentes permettant la fabrication du produit, son démoulage et son éjection,
- la figure 12 est un chronogramme représentant un exemple de réalisation des différentes étapes conformes au procédé.

La présente invention est relative à une installation de moulage, notamment destinée à la fabrication d'électrodes.

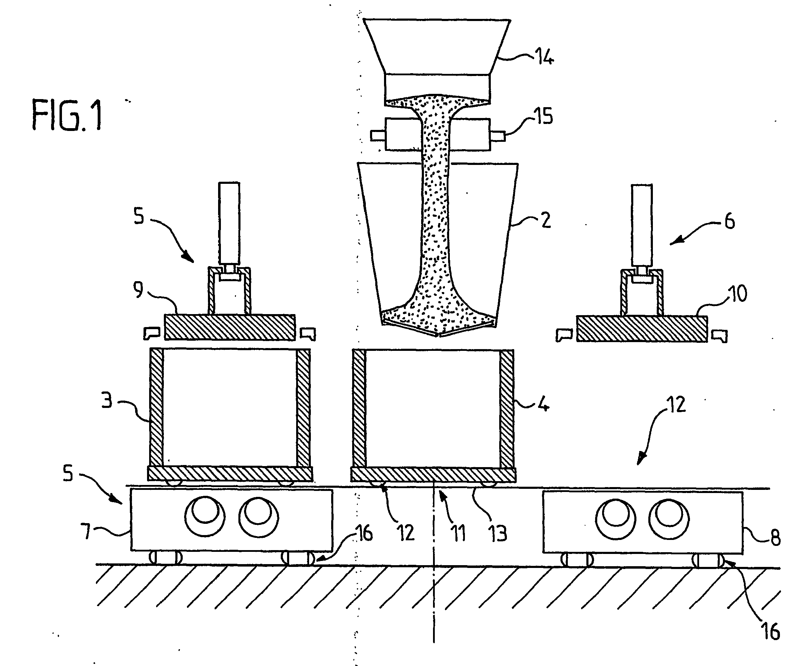

Comme représentée dans les figures 1 à 11, l'installation de moulage, conforme à l'invention, comprend une trémie 2, au moins un premier et un second moules 4 et 3, deux dispositifs de compression 6 et 5 comportant chacune une table de formage 8 et 7 et une forme pressante 10 et 9.

Selon la caractéristique principale de l'invention, l'installation de moulage comporte, en outre :
- un plan de pose 11 fixe, intercalé entre lesdits dispositifs de compression 6, 5, et à l'aplomb de ladite trémie 2,
- des moyens de déplacement 12 pour disposer chaque moule 4, 3 soit au niveau d'une table de formage 8, 7, soit au niveau dudit plan de pose 11.

Par ailleurs, selon l'invention, lesdits moyens de déplacement 12 placent alternativement chaque moule 3 et 4 au niveau dudit plan de pose.

En outre, selon l'invention, lesdits moyens de déplacement 12 peuvent être avantageusement situés au niveau desdites tables de formage 7 et 8 et au niveau du plan de pose 11.

Dans l'exemple de réalisation des figures 1 à 11, lesdits moyens de déplacement 12 sont constitués par des rails 13 coopérant avec des galets, non représenté dans les dessins annexés. Lesdits rails 13 sont disposés au niveau des tables 7, 8 et du plan de pose 11 sensiblement parallèlement au sens de déplacement desdits moules 3 et 4. L'entraînement des moules est réalisé de préférence au moyen d'une chaîne et d'un moteur hydraulique.

Toutefois, selon d'autres modes de réalisation, lesdits moyens de déplacement 12 peuvent être constitués de tout autre dispositif connu par l'homme du métier dans le domaine du convoyage et notamment du convoyage de produits dans des lignes de production, par exemple il pourra s'agir de rouleaux commandés électriquement et aptes à tourner autour de leur axe dans les deux sens en fonction du sens de déplacement souhaité de chaque moule.

Ladite installation de moulage comporte en outre des moyens de démoulage et d'éjection, non représentés dans les dessins annexés, qui permettent le démoulage et l'éjection du produit du moule 3 ou 4 au niveau dudit plan de pose 11.

A cet effet, lesdits moyens d'évacuation peuvent être placés avantageusement au niveau de la partie dudit plan de pose intermédiaire 11 situé à l'aplomb de ladite trémie 2 ou dans une variante au niveau dudit plan de pose intermédiaire 11 mais de manière décalée par rapport à ladite trémie 2 dans la direction de l'éjection du produit.

Selon l'invention, ladite trémie 2 qui permet le remplissage en pâte des moules 3 et 4 est fixe de préférence et constituée d'une trémie de pesée.

Ladite trémie 2 est elle-même alimentée au moyen d'un alimentateur de pâte 14, par l'intermédiaire d'un répartiteur 15, selon des techniques connues.

Selon l'invention, lesdites tables de formage 7 et 8 sont fixes de préférence et constituées de tables vibrantes. Ce type de table permet d'améliorer la compression et la mise en forme de la pâte en supprimant les espaces libres existant dans la pâte contenue dans le moule et pouvant notamment être dus à une mauvaise répartition de la pâte lors du remplissage dudit moule, ou encore à la granulométrie et/ou viscosité de la pâte.

Selon l'invention, par plan de pose intermédiaire 11, on entend tout type de dispositif pouvant supporter un moule, il pourra s'agir notamment d'un dispositif de soutien des rails 13 ou par exemple d'une table ou similaire.

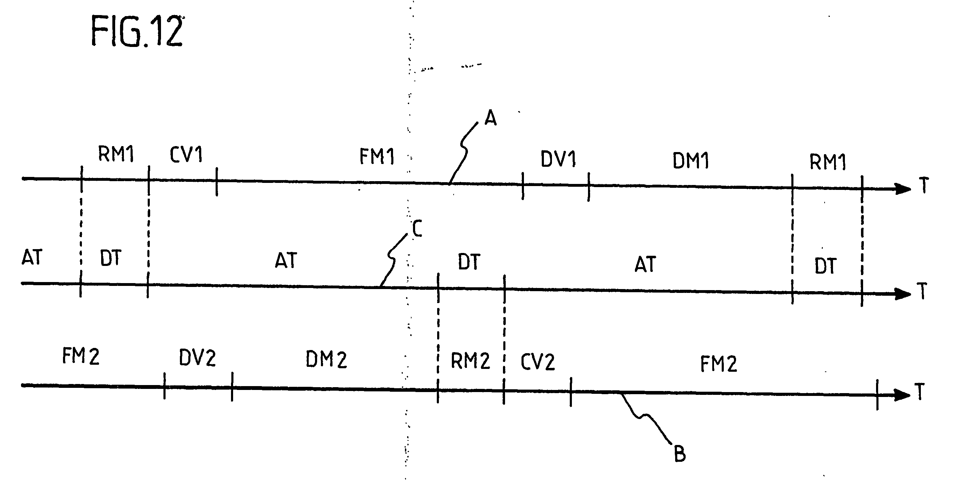

L'invention concerne également un procédé mis en oeuvre dans l'installation de moulage telle que précitée. Ledit procédé, notamment destiné à la fabrication d'électrodes, est un procédé dans lequel, comme illustré à la figure 12, on réalise pour chaque moule :
- une étape de remplissage RM1, RM2 du moule 4, 3,
- une étape de chargement CV1, CV2 du moule 4, 3 sur ladite table de formage 8, 7 correspondante,
- une étape de formage FM1, FM2,
- une étape de déchargement DV1, DV2 du moule 4, 3 de ladite table de formage 8, 7 correspondante permettant de placer ledit moule 4, 3 à l'aplomb de ladite trémie 2.

Par ailleurs, selon l'invention, on prévoit en outre une étape de démoulage et d'éjection DM1, DM2 au niveau du plan de pose intermédiaire 11 postérieurement respectivement aux étapes de déchargement DV1, DV2 du moule 4, 3.

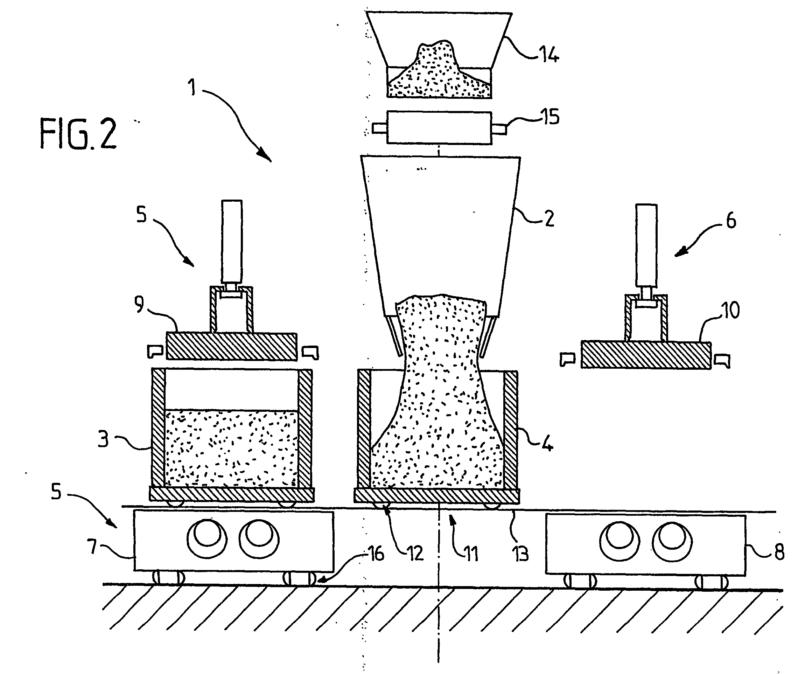

En se reportant aux figures 2 à 11, on peut voir, pour chacun des moules, les différentes étapes de formation du produit.

A la figure 1, on voit la phase d'alimentation de ladite trémie 2 qui se remplit de pâte. A ce niveau, en phase d'initialisation, les deux moules 3 et 4 sont vides, un des moules se trouvant sur sa table de formage 7, et l'autre étant situé au niveau dudit plan de pose 11 à l'aplomb de ladite trémie 2. Cependant en cours de cycle, le moule situé sur la table de formage est en train d'être formé tandis que le moule situé au niveau du plan de pose 11 est placé à l'aplomb de ladite trémie 2 après l'éjection du produit moulé.

Dans les figures suivantes, on voit un exemple de réalisation dans différentes configurations prises non pas en début mais en cours de cycle, les deux moules n'étant pas à vide.

A la figure 2 et en prenant comme référence le moule 4, comme premier moule, et le moule 3, comme second moule, on peut voir le déchargement de la pâte contenue dans ladite trémie 2 dans ledit premier moule.

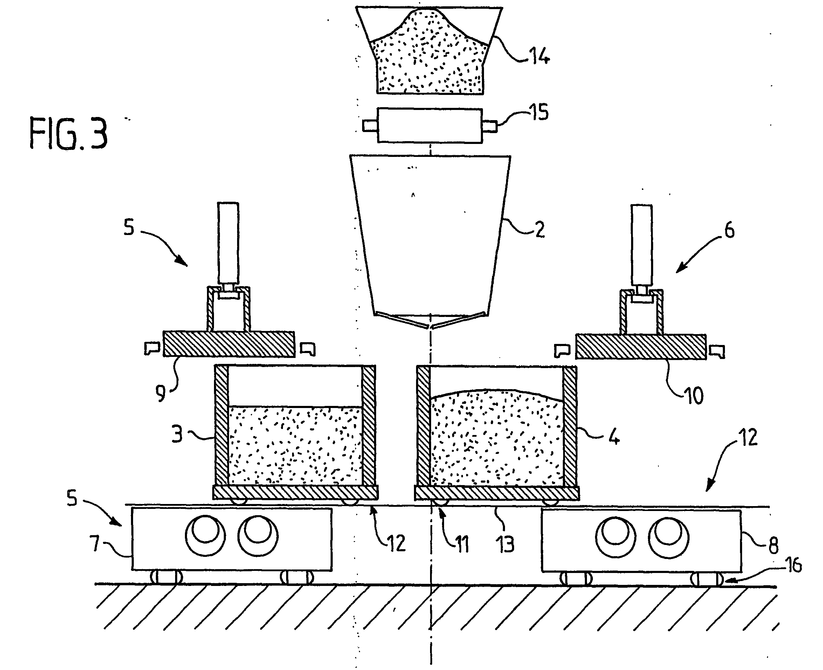

La figure 3 représente la phase de chargement, notamment par translation, du premier moule 4 sur ladite table de formage correspondante 8. Dans cette figure, on voit également que le second moule 3 est déchargé, notamment par translation simultanée ou non, de ladite table de formage 7 et va venir se placer au niveau dudit plan de pose 11.

Dans l'exemple de réalisation des figures 1 à 11, l'étape de chargement CV1 du premier moule 4 sur ladite table de formage 8 correspondante est réalisée concomitamment à l'étape de déchargement CV2 du second moule 3 et réciproquement. La définition à donner au mot « concomitamment » dans ce cas est que les étapes de chargement et de déchargement peuvent s'effectuer soit simultanément, soit avec un décalage entre elles avec une partie de recouvrement dans le temps de ces deux étapes.

Cela étant, selon un autre mode de réalisation de l'invention, les étapes de chargement et de déchargement du premier et second moules peuvent être dissociées dans le temps.

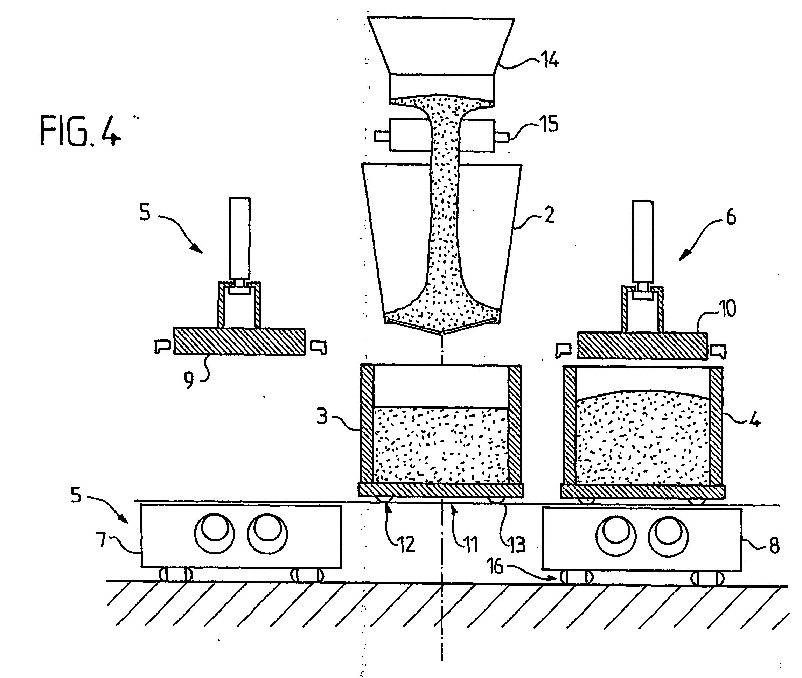

En se reportant à la figure 4, on voit que l'étape de chargement CV1 du premier moule 4 sur ladite table de formage 8 est réalisée.

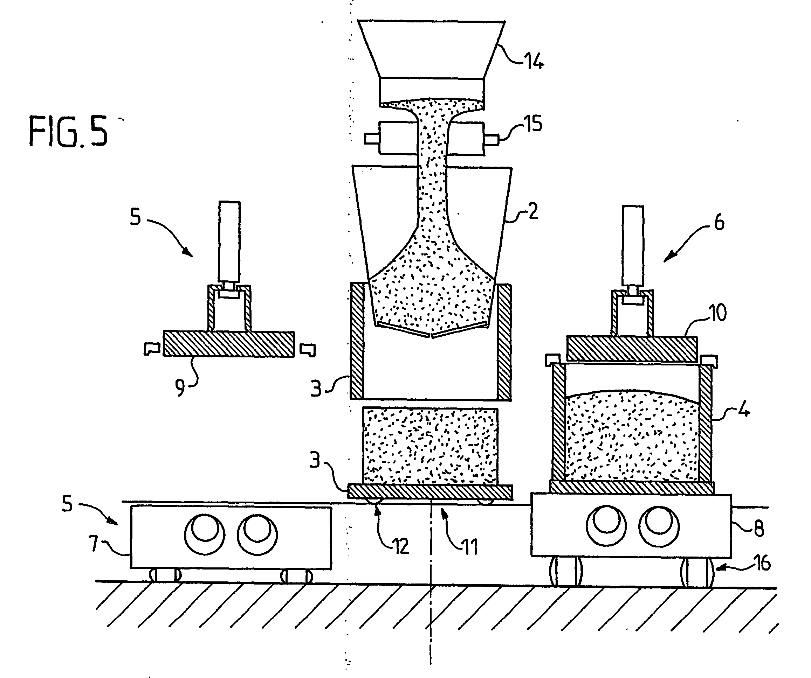

En se reportant à la figure 5, on voit que le produit contenu dans le second moule est démoulé au niveau dudit plan de pose 11. En outre on voit qu'il est prévu au niveau de la table de formage 8 des moyens de levage 16. Ces moyens de levage 16 soulèvent ladite table 8 et ledit premier moule 4 et permettent ainsi de dégager ledit premier moule des moyens de déplacement 12, ils sont constitués de préférence par des organes gonflables permettant d'assurer en outre un amortissement des vibrations crées au niveau de ladite table de formage 8. Ces moyens de levage 16 équipent également ladite table de formage 7. Cela étant il est possible d'utiliser d'autres types de dispositif de levage connu de l'homme du métier, les fonctions de levage et d'amortissement pouvant bien entendues être dissociées.

On voit ainsi à la figure 5 que lesdits moyens de levage 16 ont soulevés ledit premier moule 4 et que la mise en forme du produit commence. A cet effet, le dispositif de compression 6 est mis en service provoquant d'une part l'actionnement de la table vibrante 8 et d'autre part l'actionnement de la forme pressante 10.

A ce niveau, ladite trémie 2 est en phase d'alimentation. Cette phase d'alimentation peut débuter dès l'instant où la phase de déchargement précédente de ladite trémie 2 est terminée, ce qui permet de concilier la possibilité d'alimenter la trémie à partir d'un alimentateur fonctionnant en continu, et de mouler les produits selon un processus discontinu.

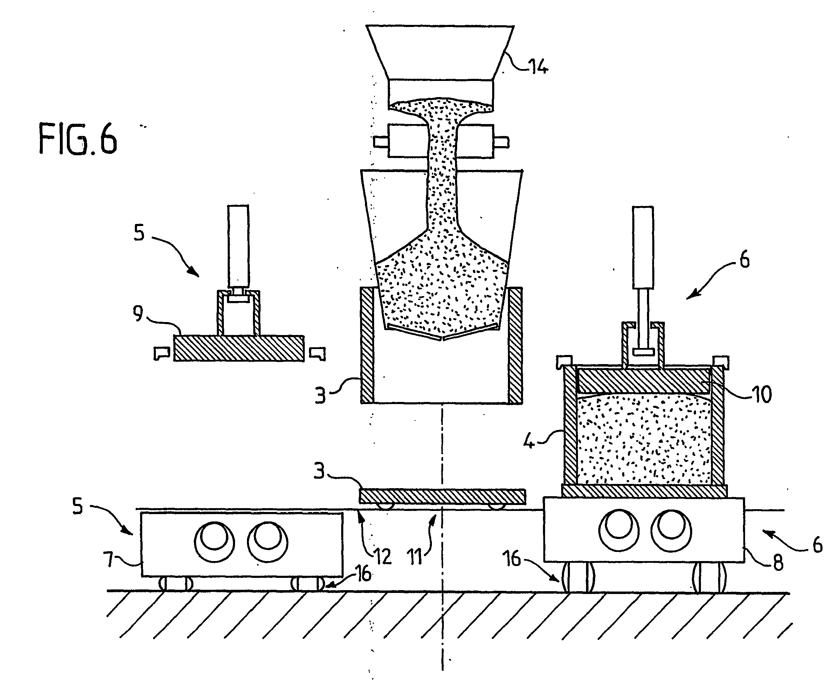

Cette figure 6 représente la fin de l'étape d'éjection DM2 du produit avec la remise en place du second moule à l'aplomb de la trémie 2. On voit également que l'étape de formage se poursuit au niveau du premier moule.

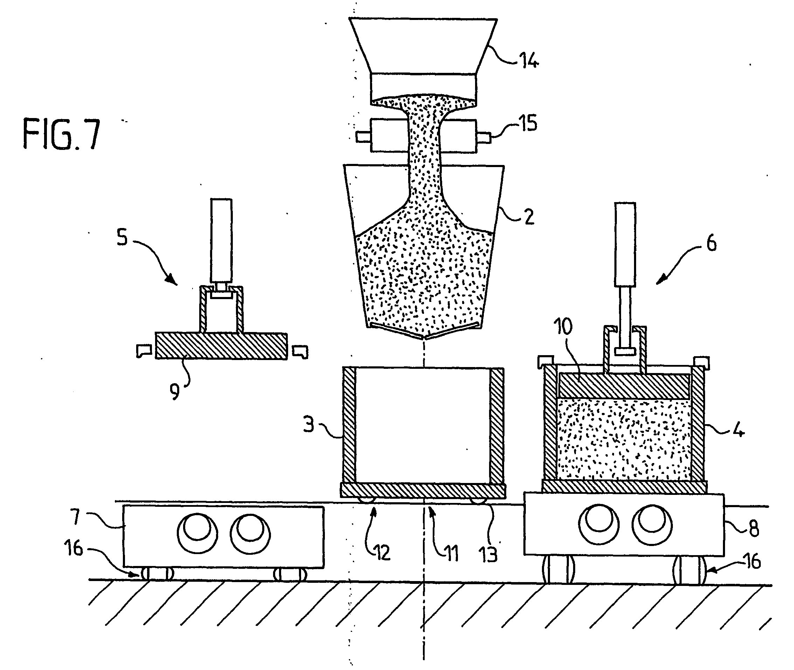

La figure 7 représente une phase d'alimentation (AT) de la trémie 2.

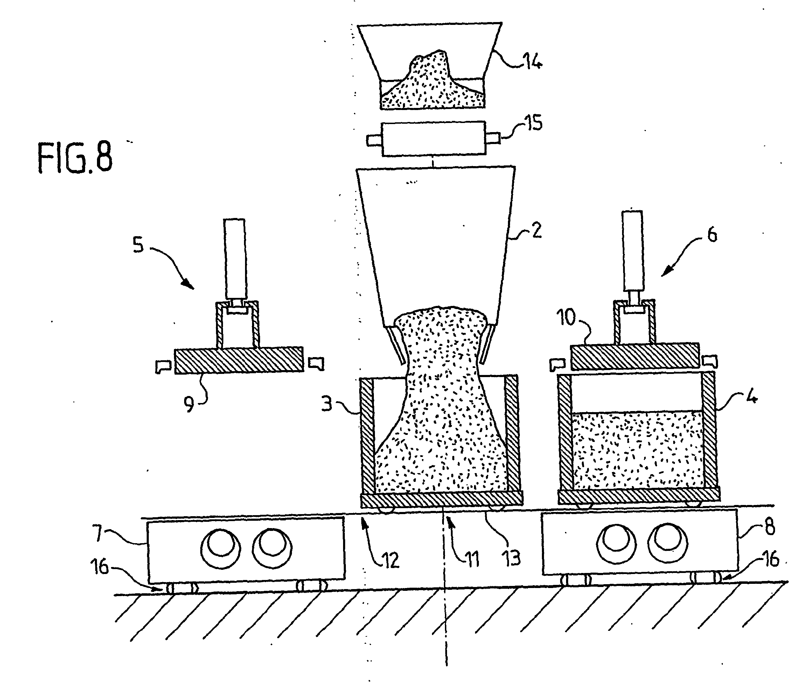

La figure 8 représente l'étape de remplissage RM2 du second moule 3, on peut constater que durant cette étape, les moyens de levage 16 positionnent ledit premier moule 4 au niveau des moyens de déplacement 12 de manière à pouvoir le déplacer une nouvelle fois.

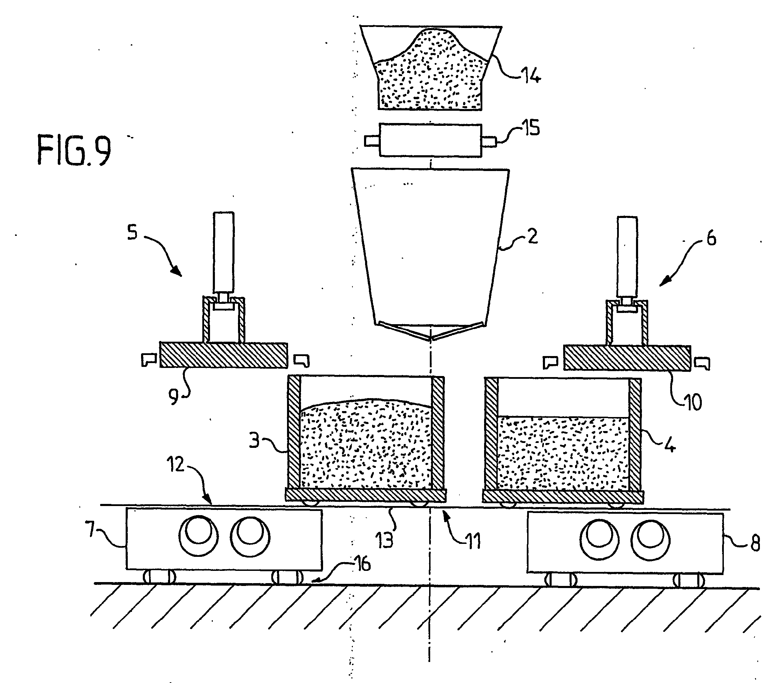

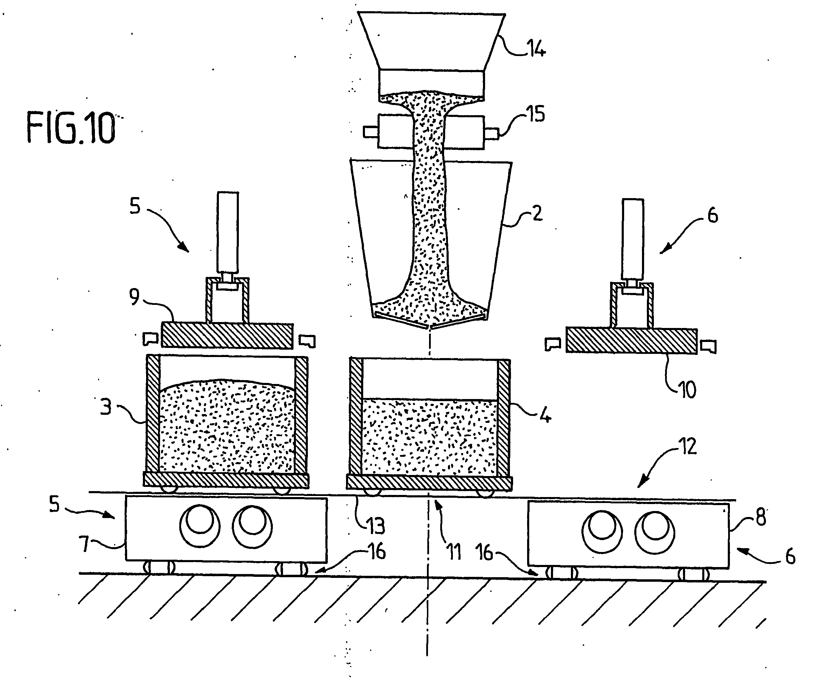

Les figures 9 et 10 représentent l'étape de chargement CV2, notamment par translation, du second moule 3 sur ladite table de formage 7, et concomitamment l'étape de déchargement DV1, notamment par translation, du premier moule 4 de ladite table de formage 8.

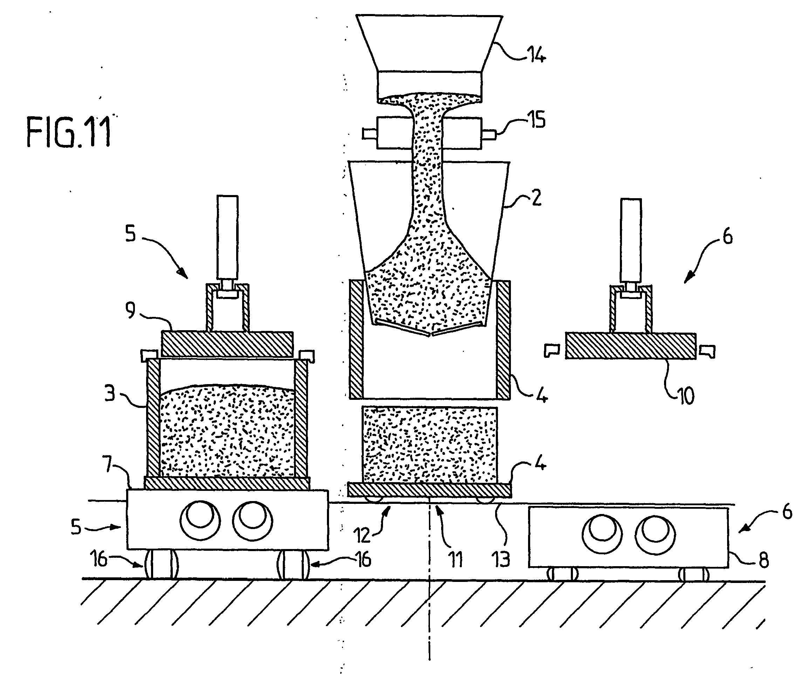

La figure 11 représente les étapes de démoulage et d'éjection DM1 du produit hors du premier moule 4, au niveau dudit plan de pose 11. Selon l'exemple de réalisation des figures 5, 6 et 11, les parois latérales des moules sont détachées de la paroi du fond grâce auxdits moyens de démoulage permettant ainsi de libérer le produit.

Lesdits moyens d'éjection permettent ensuite de déplacer ledit produit le long du plan de pose intermédiaire 11. Les parois latérales du moule sont ensuite replacées au niveau de la paroi du fond dudit moule de manière à ce que ce demier puisse être à nouveau rempli de pâte et débute un nouveau cycle de moulage. Durant cette étape de démoulage et d'éjection, réalisée postérieurement à ladite étape de déchargement du moule, se poursuit l'étape de formation FM2 pour le second moule ou éventuellement l'étape de positionnement dudit second moule au niveau des moyens de déplacement 12.

La figure 12 illustre un exemple, non limitatif, de succession des cycles de moulage du premier et second moules ainsi que du cycle d'alimentation et de déchargement de ladite trémie 2. Sur la voie A, on peut ainsi suivre les différentes étapes de moulage dans le premier moule 4, sur la voie B, les différentes étapes de moulage pour le second moule 3, et sur la voie C, les différentes étapes d'alimentation et de déchargement de la trémie 2.

On voit ainsi que l'étape de démoulage DM1 du premier moule 4 est, par exemple, réalisée, au moins partiellement, durant l'étape de formage pour le second moule 3, et réciproquement. On voit également que l'étape de remplissage du premier moule 4 est réalisée également au moins partiellement, durant l'étape de formage pour le second moule 3 et réciproquement.

Il est également important de noter que l'étape d'alimentation de la trémie (AT), prévue entre deux étapes de déchargement de la trémie (DT) est telle que l'alimentation de la trémie peut être continue ou discontinue et occuper soit partiellement, soit totalement l'espace de temps séparant lesdites étapes de déchargement successives de la trémie 2.

L'étape de formage au niveau du premier et second moules peut être réalisée, de préférence, dans un délai égal ou supérieur au délai total des autres étapes.

L'invention concerne en outre le produit réalisé à partir du procédé tel que précité. Ledit produit étant notamment un élément constitutif d'une électrode et plus particulièrement d'une anode en carbone, mais peut être également tout autre produit moulé réalisé à partir du procédé tel que précité.

Naturellement, d'autres modes de réalisation, à la portée de l'homme de l'art, auraient pu être envisagés sans pour autant sortir du cadre de l'invention défini par les revendications ci-après.

## Revendications

1. Installation de moulage, notamment destinée à la fabrication d'électrodes, comprenant une trémie (2), au moins un premier et un second moules (4, 3), deux dispositifs de compression (6, 5) comportant chacun une table de formage (8, 7) et une forme pressante (10, 9), **caractérisée en ce que** le premier et le deuxième moules (3, 4) sont constitués d'une paroi latérale et d'une paroi de fond, ladite installation de moulage (1) comprenant en outre :
- un plan de pose intermédiaire (11) fixe, intercalé entre lesdits dispositifs de compression (6, 5), et à l'aplomb de ladite trémie (2).
- des moyens de déplacement (12) pour disposer chaque moule (4, 3) soit au niveau d'une table de formage (8, 7), soit au niveau dudit plan de pose intermédiaire (11),
- des moyens d'évacuation aptes à permettre le démoulage et l'éjection du produit moulé contenu dans le moule (4, 3), au niveau dudit plan de pose intermédiaire (11) et aptes à détacher la paroi latérale du moule de la paroi de fond dudit moule.

2. Installation de moulage, selon la revendication 1, dans laquelle lesdits moyens de déplacement (12) placent alternativement chaque moule (4, 3) au niveau dudit plan de pose intermédiaire (11).

3. Installation de moulage, selon l'une quelconque des revendications 1 ou 2, dans laquelle lesdites tables de formage (8, 7) sont fixes et constituées de tables vibrantes.

4. Installation de moulage, selon l'une quelconque des revendications précédentes, dans laquelle ladite trémie (2) est une trémie fixe de pesée.

5. Installation de moulage selon l'une quelconque des revendications précédentes dans laquelle des moyens de levage 16 sont prévus au niveau des tables de formage (7, 8) permettant de dégager lesdits moules (3, 4) desdits moyens de déplacement (12).

6. Procédé de moulage, notamment pour la fabrication d'électrodes, mis en oeuvre dans l'installation, selon l'une quelconque des revendications précédentes, dans lequel on réalise pour chaque moule :
- une étape de remplissage (RM1, RM2) du moule (4, 3),
- une étape de chargement (CV1, CV2) du moule (4, 3) sur ladite table de formage (8, 7) correspondante,
- une étape de formage (FM1, FM2).
- une étape de déchargement (DV1, DV2) du moule (4, 3) de ladite table de formage (8, 7) correspondante permettant de replacer ledit moule (4, 3) à l'aplomb de ladite trémie (2).

7. Procédé, selon la revendication 6, dans lequel on prévoit en outre une étape de démoulage et une étape d'éjection (DM1, DM2) au niveau dudit plan de pose intermédiaire, postérieurement à ladite étape de déchargement (DV1, DV2) dudit moule (4, 3).

8. Procédé, selon l'une quelconque des revendications 6 ou 7, dans lequel l'étape de démoulage du premier moule (4) est réalisée, au moins partiellement, durant l'étape de formage pour le second moule (3) et réciproquement.

9. Procédé, selon l'une quelconque des revendications 6 à 8, dans lequel l'étape de remplissage du premier moule (4) est réalisée, au moins partiellement, durant l'étape de formage pour le second moule (3) et réciproquement.

10. Procédé, selon l'une quelconque des revendications 6 à 9, dans lequel l'étape de chargement du premier moule (4) sur ladite table de formage correspondant est réalisée concomitamment à l'étape de déchargement du second moule (3) et réciproquement..

## Claims

1. A moulding installation, in particular intended for the manufacture of electrodes, comprising a hopper (2), at least a first and a second moulds (4, 3), two compression devices (6, 5) each including a forming table (8, 7) and pressing form (10, 9), **characterised in that** the first and the second moulds (3, 4) are composed of a lateral wall and a bottom wall, said moulding installation (1) containing moreover:
- a fixed intermediate laying plane (11), interposed between said compression devices (6, 5) and vertical to said hopper (2),
- displacement means (12) to arrange each mould (4, 3) either at a forming table (8, 7) or at said intermediate laying plane (11),
- evacuation means capable of enabling to draw and to eject the product moulded contained in the mould (4, 3), at said intermediate laying plane (11) and capable of separating the lateral wall of the mould from the bottom wall of said mould.

2. A moulding installation, according to claim 1, wherein said displacement means (12) place alternately each mould (4, 3) at said intermediate laying plane (11).

3. A moulding installation, according to any of the claims 1 or 2, wherein said forming tables (8, 7) are fixed and constituted of vibrating tables.

4. A moulding installation, according to any of the previous claims, wherein said hopper (2) is a fixed weighing hopper.

5. A moulding installation, according to any of the previous claims, wherein lifting means 16 are provided at the forming tables (7, 8) enable to separate said moulds (3, 4) from said displacement means (12).

6. A moulding process, notably for the manufacture of electrodes, implemented in the installation, according to any of the previous claims, wherein the following operations are performed for each mould:
- a filling step (RM1, RM2) of the mould (4, 3),
- a loading step (CV1, CV2) of the mould (4, 3) on said corresponding forming table (8, 7),
- a forming step (FM1, FM2),
- an unloading step (DV1, DV2) of the mould (4, 3) from said corresponding forming table (8, 7) enabling to replace said mould (4, 3) vertical to said hopper (2).

7. A method, according to claim 6, wherein a drawing step and an ejection step (DM1, DM2) at said intermediate laying plane, after said unloading step (DV1, DV2) of said mould (4, 3).

8. A method, according to any of the claims 6 or 7, wherein the drawing step of the first mould (4) is realised, at least partially, during the forming step for the second mould (3) and vice versa.

9. A method, according to any of the claims 6 to 8, wherein the filling step of the first mould (4) is realised, at least partially, during the forming step for the second mould (3) and vice versa.

10. A method, according to any of the claims 6 to 9, wherein the loading step of the first mould (4) on said corresponding forming table is realised simultaneously with the unloading of the second mould (3) and vice versa.

## Patentansprüche

1. Anlage zum Formen, insbesondere vorgesehen für die Herstellung von Elektroden, umfassend einen Fülltrichter (2), wenigstens eine erste und eine zweite Gußform (4, 3), zwei Kompressionsvorrichtungen (6, 5), die jeweils eine Formungstafel (8, 7) und eine Preßform (10, 9) umfassen, **dadurch gekennzeichnet, daß** die erste und die zweite Gußformen (3, 4) aus einer seitlichen Wand und einer Bodenwand gebildet sind, wobei die besagte Anlage zum Formen (1) außerdem folgendes umfaßt:
- eine feste Zwischenaufstellungsebene (11), die zwischen den besagten Kompressionsvorrichtungen (6, 5) und lotrecht zu dem besagten Fülltrichter (2) eingefügt ist,
- Verstellungsmittel (12), um jede Gußform (4, 3) entweder im Bereich einer Formungstafel (8, 7) oder im Bereich der besagten Zwischenaufstellungsebene (11) anzuordnen,
- Abfuhrmittel, geeignet, um das Entnehmen und Auswerfen des geformten, in der Gußform (4, 3) enthaltenen Produktes im Bereich der besagten Zwischenaufstellungsebene (11) zu erlauben, und geeignet, um die seitliche Wand der Form von der Bodenwand der Form zu trennen.

2. Anlage zum Formen nach Anspruch 1, bei der die besagten Verstellungsmittel (12) abwechselnd jede Gußform (4, 3) im Bereich der besagten Zwischenaufstellungsebene (11) hinstellen.

3. Anlage zum Formen nach irgendeinem der Ansprüche 1 oder 2, bei der die besagten Formungstafeln (8, 7) unbeweglich sind und durch vibrierende Tische gebildet sind.

4. Anlage zum Formen nach irgendeinem der vorgehenden Ansprüche, bei der der besagte Fülltrichter (2) ein stationärer Wägetrichter ist.

5. Anlage zum Formen nach irgendeinem der vorgehenden Ansprüche, bei der die Hebemittel 16 im Bereich der Formungstafeln (7, 8) vorgesehen sind, erlaubend, die besagten Gußformen (3, 4) von den besagten Verstellungsmitteln (12) zu trennen.

6. Verfahren zum Formen, insbesondere für die Herstellung von Elektroden, angewendet in der Anlage nach irgendeinem der vorgehenden Ansprüche, bei dem für jede Gußform folgendes ausgeführt wird:
- einen Schritt zum Füllen (RM1, RM2) der Gußform (4, 3),
- einen Schritt zum Beschicken (CV1, CV2) der Gußform (4, 3) auf der besagten entsprechenden Formungstafel (8, 7),
- einen Schritt zum Formen (FM1, FM2),
- einen Schritt zum Entladen (DV1, DV2) der Gußform (4, 3) von der besagten entsprechenden Formungstafel (8, 7), erlaubend, die besagte Gußform (4, 3) lotrecht zu dem besagten Fülltrichter (2) zurückzustellen.

7. Verfahren nach Anspruch 6, bei dem außerdem ein Schritt zum Entnehmen und ein Schritt zum Auswerfen (DM1, DM2) im Bereich der besagten Zwischenaufstellungsebene vorgesehen sei, anschließend nach dem besagten Schritt zum Entladen (DV1, DV2) der besagten Gußform (4, 3).

8. Verfahren nach irgendeinem der Ansprüche 6 oder 7, bei dem der Schritt zum Entnehmen aus der ersten Gußform (4) wenigstens zum Teil während des Schrittes der Formung für die zweite Gußform (3), und umgekehrt, ausgeführt wird.

9. Verfahren nach irgendeinem der Ansprüche 6 bis 8, bei dem der Schritt zum Füllen der ersten Gußform (4) wenigstens zum Teil während des Schrittes der Formung für die zweite Gußform (3), und umgekehrt, ausgeführt wird.

10. Verfahren nach irgendeinem der Ansprüche 6 bis 9, bei dem der Schritt zum Beschicken der ersten Gußform (4) auf der besagten entsprechenden Formungstafel gleichzeitig mit dem Schritt zum Entladen der Gußform (3), und umgekehrt, ausgeführt wird.
